(19) Europäisches Patentamt / European Patent Office / Office européen des brevets

(11) **EP 3 751 256 B1**

(12) **EUROPÄISCHE PATENTSCHRIFT**

(45) Veröffentlichungstag und Bekanntmachung des Hinweises auf die Patenterteilung:
**31.05.2023 Patentblatt 2023/22**

(21) Anmeldenummer: **20170538.1**

(22) Anmeldetag: **21.04.2020**

(51) Internationale Patentklassifikation (IPC):
**G01N 21/55** *(2014.01)* **G01V 8/12** *(2006.01)*
G01N 21/57 *(2006.01)* G01N 21/47 *(2006.01)*

(52) Gemeinsame Patentklassifikation (CPC):
**G01V 8/12; G01N 21/55;** G01N 21/57;
G01N 2021/4711; G01N 2021/555

(54) **OPTOELEKTRONISCHES SENSORSYSTEM ZUM DETEKTIEREN VON OBJEKTEN IN EINEM ÜBERWACHUNGSBEREICH**

OPTOELECTRONIC SENSOR SYSTEM FOR DETECTING OBJECTS IN A SURVEILLANCE RANGE

SYSTÈME DE CAPTEUR OPTOÉLECTRONIQUE PERMETTANT DE DÉTECTER DES OBJETS DANS UNE ZONE DE SURVEILLANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2019 DE 102019116067**

(43) Veröffentlichungstag der Anmeldung:
**16.12.2020 Patentblatt 2020/51**

(73) Patentinhaber: **SICK AG**
**79183 Waldkirch (DE)**

(72) Erfinder:
• **Günter, Georg**
**79100 Freiburg im Breisgau (DE)**

• **Eble, Johannes**
**79183 Waldkirch (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**EP-A2- 2 881 762** **WO-A1-2018/127789**
**CN-A- 106 052 596** **DE-A1-102005 062 258**
**DE-B- 1 120 750** **DE-C- 722 877**
**JP-A- 2001 324 314** **US-A1- 2001 017 727**
**US-A1- 2005 236 554** **US-A1- 2018 149 589**

**Beschreibung**

Die vorliegende Erfindung betrifft ein optoelektronisches Sensorsystem zum Detektieren von Objekten in einem Überwachungsbereich entsprechend Anspruch 1 mit einem Lichtsender zum Aussenden von Sendelicht entlang eines Sendelichtpfads in den Überwachungsbereich, einem Lichtempfänger zum Empfangen von Empfangslicht aus dem Überwachungsbereich, das von einem zu detektierenden Objekt im Überwachungsbereich in Richtung des Lichtempfängers diffus und/oder spiegelnd reflektiert wird, wobei der Sendelichtpfad und der Empfangslichtpfad gemäß dem Autokollimationsprinzip zumindest abschnittsweise zusammenfallen, und einer Objektivanordnung.

Derartige optoelektronische Sensorsysteme werden auch als Lichttaster bezeichnet. Der Sendelichtpfad und der Empfangslichtpfad fallen gemäß der Autokollimationskonfiguration zumindest abschnittsweise, d.h. insbesondere innerhalb des Überwachungsbereichs zusammen, so dass Sendelicht, welches auf eine senkrecht zum Sendelichtpfad verlaufende Oberfläche trifft, im Zentrum des Empfangslichtpfades verlaufend in Richtung des Lichtsenders zurückgeworfen wird. Die im vorliegenden Text verwendete Definition, wonach der Sendelichtpfad und der Empfangslichtpfad gemäß dem Autokollimationsprinzip zumindest abschnittsweise zusammenfallen, umfasst auch solche Abweichungen zwischen diesen Lichtpfaden, die lediglich darauf zurückzuführen sind, dass die reflektierende Oberfläche nicht senkrecht zum Sendelichtpfad verläuft oder gekrümmt ist. Innerhalb des Sensorsystems werden der Sendelichtpfad und der Empfangslichtpfad getrennt, so dass das Empfangslicht den Lichtempfänger erreichen kann. Dies erfolgt in der Regel mittels eines Strahlteilers, bevorzugt mittels eines Teilerspiegels. Unter dem Begriff "Licht" wird hier nicht nur sichtbare, d.h. für das menschliche Auge sichtbare, elektromagnetische Strahlung, verstanden, sondern jegliche Form von optischer Strahlung, d.h. insbesondere auch ultraviolettes oder infrarotes Licht, subsummiert.

Für viele Anwendungen ist es wünschenswert, zusätzliche Informationen über die Oberflächenbeschaffenheit eines detektierten Objekts zu erlangen. Je nach Oberflächenbeschaffenheit kann nämlich das Sendelicht diffus oder spiegelnd reflektiert werden, wobei glänzende Oberflächen das Sendelicht eher spiegelnd reflektieren, während matte Oberflächen das Sendelicht diffus reflektieren oder remittieren. Bei realen Objekten wird das Empfangslicht in der Regel sowohl eine diffus reflektierte Komponente als auch eine spiegelnd reflektierte Komponente umfassen. Wenn in diesem Text der Ausdruck "reflektieren" (auch in verschiedenen Formen) verwendet wird, ist im Zweifelsfall sowohl ein diffuses als auch ein spiegelndes Reflektieren gemeint, sofern nichts Näheres spezifiziert ist.

Eine Objektdetektion, bei der Objekte auch aufgrund ihrer Oberflächeneigenschaften unterschieden bzw. charakterisiert werden können, erlaubt eine differenziertere Erfassung von Objekten im Überwachungsbereich.

Optoelektronische Sensoren, welche geeignet sind, auch spiegelnd reflektiertes Licht zuverlässig zu detektieren, werden auch als Glanzsensoren bezeichnet. Bei vielen Anwendungen von Glanzsensoren, bei denen der Objektwinkel und/oder der Objektabstand variieren kann, kann jedoch das sogenannte Glanzsignal, d.h. das Signal, das auf spiegelnd reflektiertes Licht zurückzuführen ist, winkel- und abstandsabhängig schwanken. Unter dem Objektwinkel wird beispielsweise ein Winkel verstanden, welcher zwischen einer Oberflächennormalen eines Objekts und einer Referenzachse des Sensors, z.B. der optischen Achse des Sendelichtpfads, aufgespannt ist.

Der Einfluss von Objektwinkel und Objektabstand auf die Intensität des Glanzsignals kann bereits dadurch vermindert werden, dass der Sendelichtpfad und der Empfangslichtpfad zumindest abschnittsweise kollinear verlaufen, d.h. in der vorstehend genannten Autokollimationskonfiguration. Ein solcher Glanzsensor in Autokollimationskonfiguration ist in EP 2 278 361 A1 offenbart. Hier sind zwei Empfangskanäle vorgesehen, nämlich ein sogenannter Glanzkanal zum Empfang des Glanzsignals, bei dem der Sendelichtpfad und Empfangslichtpfad parallel verlaufen, sowie ein weiterer, sogenannter Remissionskanal, bei dem der Sendelichtpfad und der Empfangslichtpfad in Triangulationsanordnung verlaufen. Ein auf einem zu detektierenden Objekt erzeugter Sendelichtfleck wird durch eine Empfangsoptik jeweils auf einen nicht näher spezifizierten Lichtempfänger abgebildet.

Ein weiterer Sensor zur Erkennung matter und glänzender Oberflächen in Autokollimationsanordnung ist in DE 10 2013 015 036 A1 beschrieben. Als Empfänger können beispielsweise drei Fotodioden vorgesehen sein, denen jeweilige Farbfilter vorgeordnet sind.

In DE 10 2015 115 016 A1 ist ein Lichtkontrasttaster in Autokollimationskonfiguration beschrieben, bei dem mehrere Lichtsender vorgesehen sind, welche Lichtstrahlen unterschiedlicher Wellenlängen emittieren. Die Sendelichtstrahlen werden durch einen Lichtleiter hindurchgeleitet, in dem eine Durchmischung der von den einzelnen Lichtsendern emittierten Lichtstrahlen erfolgt.

WO 2018/127789 A1 befasst sich mit einem System und einem Verfahren zur Identifikation und Klassifikation von Objekten auf der Grundlage eines LIDAR-Systems, d.h. einem lichtbasierten System zur Abstands- und/oder Geschwindigkeitsmessung. Das System ist unter anderem auch dazu ausgelegt, Oberflächenwinkel eines erfassten Objekts zu ermitteln.

DE 10 2005 062 258 A1 betrifft eine optoelektronische Vorrichtung, mit deren Hilfe der Abstand eines spiegelnd reflektierenden Objekts bestimmt werden kann. Hierzu werden Sendelichtstrahlen in einen Raumwinkelbereich abgestrahlt und die Winkellage von mindestens zwei Direktreflexen durch ein Mehrfachempfangselement derart ausgewertet, dass aus dem Abstand der beiden Empfangslichtflecke die Objektdistanz berechnet wird.

US 2001/0017727 A1 befasst sich mit einem laserbasierten Abbildungssystem, bei dem ein nicht lineares optisches Medium als optischer parametrischer Verstärker und zur gleichzeitigen Frequenzumwandlung eingesetzt wird. JP2001324314A offenbart eine optische Vorrichtung im Autokollimationsprinzip zur Beurteilung einer Oberflächenbeschaffenheit.

Es ist die Aufgabe der vorliegenden Erfindung, ein gattungsgemäßes optoelektronisches Sensorsystem derart weiterzubilden, dass es zur verbesserten Detektion bzw. Auswertung von spiegelnd reflektiertem Licht geeignet ist.

Die Lösung der Aufgabe erfolgt durch ein optoelektronisches Sensorsystem mit den Merkmalen des Anspruchs 1. Erfindungsgemäß ist vorgesehen, dass der Lichtempfänger als Bildsensor ausgebildet ist, und dass die Objektivanordnung derart ausgestaltet ist, dass der Intensitätsverlauf einer von der Objektivanordnung auf dem Lichtempfänger erzeugten zweidimensionalen Empfangslichtverteilung Informationen über den Streuwinkel bezogen auf eine Oberfläche eines detektierten Objekts umfasst. Mit anderen Worten hängt der Auftreffort eines Lichtstrahls auf dem Lichtempfänger unter anderem von dem Streuwinkel ab, unter dem er bezogen auf die Objektoberfläche, insbesondere auf eine Oberflächennormale der Objektoberfläche, reflektiert wurde. Die Objektivanordnung erzeugt auf dem Bildsensor also kein Abbild eines Lichtflecks, welcher von dem Lichtsender auf der Objektoberfläche erzeugt wurde, sondern eine streuwinkelabhängige Lichtverteilung, wobei in dem zweidimensionalen Intensitätsverlauf dieser Lichtverteilung bezogen auf die Erstreckungsebene des Bildsensors die genannten Informationen über den Streuwinkel kodiert sind. Die Empfangslichtverteilung bzw. deren Intensitätsverlauf kann auch als eine Fouriertransformierte des von dem detektierten Objekt spiegelnd bzw. diffus reflektierten Empfangslichts aufgefasst werden. Unter dem Intensitätsverlauf der zweidimensionalen Empfangslichtverteilung wird insbesondere ein zweidimensionaler Verlauf der Signalintensität oder auch der Signalamplitude des auf dem Bildsensor auftreffenden, durch die Objektivanordnung beeinflussten Empfangslichts verstanden, d.h. der Intensitätsverlauf wird durch ein dreidimensionales Diagramm mit zweidimensionalen Ortskoordinaten und der Signalintensität oder der Signalamplitude als dritter Koordinate repräsentiert.

Der Auftreffort eines Lichtstrahls auf dem Lichtempfänger kann von mehreren Parametern abhängen, beispielsweise von dem vorstehend genannten Objektwinkel, dem Objektabstand und in statistischer Weise von der Beschaffenheit der reflektierenden Oberfläche. Die erfindungsgemäße Erzeugung einer streuwinkelabhängigen Empfangslichtverteilung ermöglicht zum einen eine verbesserte Detektion von spiegelnd reflektiertem Licht, welches zwar auf Grund seiner größeren Objektwinkelabhängigkeit schwieriger zu detektieren ist, jedoch im Vergleich zu ausschließlich diffus reflektiertem Licht zusätzliche Informationen über eine Oberflächenbeschaffenheit des Objekts enthält. Zum anderen wird eine Erfassung von Einflüssen auf den Auftreffort ermöglicht, die auf Variationen des Objektwinkels und/oder des Objektabstands auf die Empfangslichtverteilung zurückzuführen sind Durch die Verwendung eines Bildsensors zur Abtastung der Empfangslichtverteilung bzw. deren Intensitätsverlauf werden die optoelektronischen Voraussetzungen für eine quantifizierende Auswertung der Empfangslichtverteilung geschaffen, wobei gegebenenfalls auch Einflüsse auf das Empfangslicht auf Grund von Variationen des Objektwinkels und/oder des Objektabstandes feststellbar sein können. Die Ausgestaltung des Sensorsystems als Autokollimationsanordnung verringert in vorteilhafter Weise die Abhängigkeit des Auftrefforts eines Lichtstrahls auf dem Lichtempfänger vom Objektabstand, so dass auch für Objekte mit variierendem Abstand zum Sensor eine zuverlässige Erfassung und auch eine Charakterisierung der Oberflächenbeschaffenheit möglich ist.

Da die geometrischen Parameter, insbesondere die Brennweite und der Eintrittspupillendurchmesser der Objektivanordnung, die Größe des Lichtempfängers und dessen Abstand von der Objektivanordnung zusammen einen maximal erfassbaren Empfangswinkelbereich definieren, werden diese Parameter bevorzugt so aufeinander abgestimmt, dass auch bis zu einem vorgegebenen maximalen Objektwinkel die gesamte Empfangslichtverteilung oder zumindest ein wesentlicher Teil davon noch auf den Lichtempfänger trifft.

Vorteilhafterweise umfassen die Informationen über den Streuwinkel sowohl Informationen über eine Polarwinkelkomponente als auch eine Azimutwinkelkomponente. Anschaulich beschreibt die Polarwinkelkomponente, um welchen Winkel ein jeweiliger gestreuter Lichtstrahl von einer Flächenorthogonalen abweicht und die Azimutwinkelkomponente, in welche Richtung bezogen auf eine gedachte Kreislinie auf der streuenden Oberfläche - mit dem Schnittpunkt der Flächenorthogonalen mit der Oberfläche als Mittelpunkt - die Streuung erfolgt ist. Wenn man die Empfangslichtverteilung in einem Polarkoordinatensystem betrachtet, dessen Ursprung dem Auftreffort eines senkrecht zur Objektoberfläche reflektierten Lichtstrahls auf dem Lichtempfänger entspricht, so repräsentiert die Radialkoordinate in diesem Polarkoordinatensystem die Polarwinkelkomponente des Streuwinkels und die Winkelkoordinate die Azimutwinkelkomponente des Streuwinkels, d.h. die Richtung, in welche die Streuung erfolgt ist. Die Polarwinkelkomponente überdeckt in der Regel einen Bereich von 0 bis 90° und die Azimutwinkelkomponente einen Winkelbereich von 0 bis 360°.

Bevorzugt umfasst die Objektivanordnung zumindest eine gemeinsame Linse, welche in einem Bereich angeordnet ist, in dem der Sendelichtpfad und der Empfangslichtpfad zusammenfallen. Anstelle oder zusätzlich zu der gemeinsamen Linse kann die Objektivanordnung auch einen gemeinsamen gekrümmten Spiegel umfassen, auch wenn dies im vorliegenden Text nicht immer gesondert erwähnt ist.

Bevorzugt ist in Ausbreitungsrichtung des Sendelichts betrachtet vor der gemeinsamen Linse ein Strahlteiler, insbesondere Teilerspiegel, angeordnet, welcher den Sendelichtpfad und den Empfangslichtpfad zusammenführt bzw.

einander überlagert.

Bevorzugt ist das Sensorsystem derart eingerichtet ist, dass das Sendelicht als paralleles Strahlenbündel in den Überwachungsbereich eintritt.

Bevorzugt umfasst das Sensorsystem eine Sendeoptik, wobei die Sendeoptik mit der gemeinsamen Linse derart zusammenwirkt, dass das Sendelicht als paralleles Strahlenbündel in den Überwachungsbereich eintritt.

Die vier vorstehend gennannten bevorzugten Ausführungsformen stellen vorteilhafte Implementierungen einer Autokollimationskonfiguration dar.

Gemäß der Erfindung umfasst das Sensorsystem eine mit dem Lichtempfänger verbundene Auswerteeinheit, welche dazu eingerichtet ist, eine von dem Lichtempfänger erfasste Empfangslichtverteilung auszuwerten, um aus zumindest einem Charakteristikum der Empfangslichtverteilung Informationen über wenigstens ein Oberflächencharakteristikum der Oberfläche des detektierten Objekts zu erhalten. Die Auswerteeinheit kann somit den Verlauf oder die Form der Empfangslichtverteilung auswerten, um dadurch Rückschlüsse auf die Oberflächenbeschaffenheit eines detektierten Objekts zu schließen.

Das zumindest eine Charakteristikum der Empfangslichtverteilung umfasst eine Höhe eines Maximums, eine Halbwertsbreite und/oder zumindest ein zweidimensionales Moment der Empfangslichtverteilung, insbesondere den Erwartungswert oder die Varianz. Es können also ein oder mehrere Charakteristika der Empfangslichtverteilung zur Auswertung herangezogen werden. Als weitere Charakteristika der Empfangslichtverteilung können auch Linien- oder Flächenintegrale über die gesamte Empfangslichtverteilung oder Teilbereiche hiervon herangezogen werden.

Vorteilhafterweise umfasst das zumindest eine Oberflächencharakteristikum den Glanzgrad und/oder den Remissionsgrad der Oberfläche des detektierten Objekts. Des Weiteren können auch anisotrope Strukturen oder Muster der Oberfläche erkannt und insbesondere auch vermessen werden, welche sich in der Form der Empfangslichtverteilung niederschlagen. Dies ist zum Beispiel bei einer gebürsteten Oberfläche der Fall. So können beispielsweise Empfangslichtverteilungen für derartige anisotrop strukturierte Oberflächen zwei Hauptachsen besitzen, entlang derer sie unterschiedliche Ausdehnungen aufweisen, welche unterschiedliche Glanzgrade repräsentieren. Das zumindest eine Oberflächencharakteristikum kann insbesondere in einem einzigen Messvorgang, d.h. auf der Grundlage nur eines einzigen Abbildes der Empfangslichtverteilung ermittelt werden.

Gemäß einer vorteilhaften Ausführungsform ist die Auswerteeinheit dazu eingerichtet, eine Verkippung der Oberfläche des detektierten Objekts in Bezug auf eine vorgegebene Referenzachse auf der Grundlage einer Abweichung der Auftreffposition der Empfangslichtverteilung auf dem Lichtempfänger von einer Referenz-Auftreffposition zu ermitteln. Unter einer Verkippung wird insbesondere eine Abweichung des Auftreffwinkels des Sendelichts auf die Oberfläche von der Senkrechten verstanden. Die Verkippung kann insbesondere, ggf. unter Berücksichtigung von Umrechnungsfaktoren, mit dem eingangs genannten Objektwinkel gleichgesetzt werden. Bevorzugt kann die Verkippung auch quantifiziert werden, so dass vorteilhafterweise das Maß und/oder die Richtung dieser Verkippung in die Auswertung miteinbezogen werden kann, beispielsweise um eine Korrektur durchzuführen, wenn aufgrund der Oberflächenbeschaffenheit das vorstehend genannte zumindest eine Charakteristikum der Empfangslichtverteilung durch die Verkippung beeinflusst wird.

Vorteilhafterweise ist die Auswerteeinheit dazu eingerichtet, Informationen über wenigstens ein Oberflächencharakteristikum der Oberfläche des detektierten Objekts und/oder eine Verkippung der Oberfläche des detektierten Objekts in Bezug auf eine vorgegebene Referenzachse auf der Grundlage eines Vergleichs der von dem Lichtempfänger erfassten Empfangslichtverteilung für ein Objekt mit einer Vielzahl von Referenzempfangslichtverteilungen auszuwerten, welche im Rahmen eines vorgängig durchgeführten Einlernvorgangs für verschiedene Referenzobjekte mit jeweils unterschiedlichen bekannten Oberflächencharakteristika und bei unterschiedlichen bekannten Verkippungen der Oberfläche erfasst wurden. Die Auswertung erfolgt hier auf der Grundlage, oder zumindest unter Berücksichtigung, von Referenzmustern. Auf der Grundlage eines solchen Mustervergleichs kann beispielsweise herausgefunden werden, welche der vorgängig aufgenommenen Referenzlichtverteilungen der aktuellen, auszuwertenden Empfangslichtverteilung am ähnlichsten ist, so dass die Oberflächencharakteristika und die Verkippung, die der Referenzlichtverteilung mit der größten Ähnlichkeit zu der auszuwertenden Empfangslichtverteilung zugeordnet sind, als Ergebnisse der auszuwertenden Empfangslichtverteilung zugeordnet werden. Gegebenenfalls können hierbei auch Interpolationen durchgeführt werden. Alternativ zu einem Mustervergleich kann eine algebraische Auswertung oder eine Auswertung auf der Grundlage von Look-Up-Tabellen erfolgen, wobei die zugrundeliegenden Gleichungen, Gleichungssysteme und/oder Tabellenwerte im Rahmen von Einlernvorgängen ermittelt werden können. Die Auswerteeinheit kann ferner dazu eingerichtet sein, objektwinkelabhängige Veränderungen der Lichtverteilung auf der Grundlage von an Objekten mit verschiedenen Glanzgraden durchgeführten Kalibrationen zu korrigieren.

Zusätzlich zu den unterschiedlichen Oberflächencharakteristika und den unterschiedlichen Verkippungen kann der Einlernvorgang auch bei unterschiedlichen Abständen der Referenzobjekte von dem Sensorsystem durchgeführt werden. Der Abstand stellt somit auch einen weiteren Parameter im Rahmen des Einlernvorgangs dar.

Erfindungsgemäß ist die Auswerteeinheit dazu eingerichtet, Störlichtkomponenten, welche auf Lichtstreuungen an Linsen der Objektivanordnung oder auf andere Störlichtquellen zurückzuführen sind, aus einer erfassten Empfangslichtverteilung vor einer Auswertung derselben durch Subtraktion einer Korrekturempfangslichtverteilung von der erfassten Empfangslichtverteilung oder auf der Grundlage eines Mustererkennungsalgorithmus zu entfernen. Bei Sensorsystemen besteht oftmals die Problematik, dass aufgrund von Streueffekten geringe Teile des Sendelichts bereits innerhalb des Sensorsystems zurückgestreut werden und dabei die Empfangslichtverteilung verfälschen. Dies kann insbesondere an einer bildseitigen Fläche einer Frontlinse der Objektivanordnung geschehen. Es ist daher wünschenswert, derartige Störlichtkomponenten bei der Auswertung dahingehend zu berücksichtigen, dass diese aus der auszuwertenden Empfangslichtverteilung herausgefiltert werden können. Da die Störlichtkomponenten in der Regel nicht vom Objekt abhängig sind, können Korrekturempfangslichtverteilungen aufgezeichnet werden, beispielsweise ebenfalls im Rahmen des Einlernvorgangs und/oder in einem vorgelagerten Kalibrationsschritt.

Beispielsweise kann eine Korrekturempfangslichtverteilung bei regulären Betriebsbedingungen des Sensorsystems, jedoch ohne Anwesenheit eines Objekts im Überwachungsbereich, erfasst werden. Unter regulären Betriebsbedingungen wird insbesondere verstanden, dass das Sensorsystem bei eingeschaltetem Lichtsensor und gegebenenfalls vorhandenem Raum- oder Umgebungslicht betrieben wird, welches von dem Lichtempfänger miterfasst wird. Ein bei regulären Betriebsbedingungen aufgenommenes Referenzbild kann beispielsweise von der auszuwertenden Empfangslichtverteilung subtrahiert werden, gegebenenfalls unter Berücksichtigung von etwaigen Skalierungsfaktoren, die beispielsweise unterschiedliche Belichtungszeiten berücksichtigen.

Weiterhin kann eine Korrekturempfangslichtverteilung auch mehrstufig erstellt werden. In einem ersten Kalibrationsschritt werden Störlichtkomponenten aufgenommen, die auf Streueffekte innerhalb des Sensorsystems zurückzuführen sind. Hierfür wird das Sensorsystem bei eingeschaltetem Lichtsender in einem dunklen und lichtabsorbierenden Raum betrieben, so dass nur Licht, das innerhalb des Sensorsystems reflektiert wird, den Lichtempfänger erreichen kann. In einem zweiten Kalibrationsschritt wird das vorhandene Raum- oder Umgebungslicht detektiert. Hierfür wird bei ausgeschaltetem Lichtsender das Empfangslicht erfasst. In jedem Kalibrationsschritt wird somit eine jeweilige Störlichtverteilung erfasst und ggf. nach weiterer Bearbeitung, z.B. einer Normierung, als Korrekturempfangslichtverteilung gespeichert, mittels derer entsprechende Störlichtkomponenten subtraktiv - gegebenenfalls unter Berücksichtigung von Skalierungsfaktoren - aus dem Messsignal herausgerechnet werden können. Vorteilhaft an der mehrstufigen Aufnahme der Korrekturverteilung ist, dass hierdurch auch wechselnde Raum- und Umgebungslichtbedingungen im Betrieb des Sensors in einfacher Weise berücksichtigt werden können.

Gemäß einer vorteilhaften Ausführungsform ist im Strahlengang des Sendelichts zur Unterdrückung von Störlichtkomponenten, welche auf Lichtstreuungen an Linsen der Objektivanordnung zurückzuführen sind, ein Wellenlängenkonversionselement vorgesehen, das die ursprüngliche Wellenlänge des Sendelichts nach dem Durchgang durch die Objektivanordnung verändert, so dass in der Wellenlänge verändertes Licht auf ein Objekt trifft, und dass im Strahlengang des Empfangslichts ein Filter vorgesehen ist, welcher in der Wellenlänge verschobenes Licht passieren lässt und Licht mit der ursprünglichen Wellenlänge des Sendelichts blockiert. Das Wellenlängenkonversionselement, beispielsweise eine Phosphorschicht, kann bevorzugt an der objektseitigen Fläche einer Frontlinse der Objektivanordnung (d.h. der äußersten Linse) vorgesehen sein. Eine Anregung des Wellenlängenkonversionselements kann etwa durch Sendelicht im Wellenlängenbereich zwischen 350 und 400 nm erfolgen. Das Filter kann beispielsweise unmittelbar vor dem Lichtempfänger angeordnet sein. Hierbei wird ausgenutzt, dass derjenige Anteil des Sendelichts, der an internen Flächen des Sensorsystems reflektiert wurde, das Wellenlängenkonversionselement nicht passiert und daher gegenüber dem Empfangslicht eine unterschiedliche Wellenlänge aufweist. Mit Hilfe des Filters kann dieses intern reflektierte Störlicht aus dem Empfangslicht herausgefiltert werden.

Gemäß einer weiteren vorteilhaften Ausführungsform ist der Lichtsender zum Aussenden von linear polarisiertem Sendelicht eingerichtet, wobei in einem Austrittsbereich des Sendelichts aus dem Sensorsystem ein optisches Element angeordnet ist, welches dazu eingerichtet ist, die Polarisationsebene des Sendelichts zu drehen, und wobei im Bereich desjenigen Teils des im Sensorsystem verlaufenden Empfangslichtpfads, welcher nicht mit dem Sendelichtpfad zusammenfällt, ein Polarisationsfilter vorgesehen ist, das in der ursprünglichen Polarisationsebene des Sendelichts polarisiertes Licht blockiert und Licht, dessen Polarisationsebene gleich der gedrehten Polarisationsebene ist, passieren lässt. Hierdurch kann eine Unterdrückung von Störlichtkomponenten durch eine polarisationsselektive Filterung vorgenommen werden. Zur Polarisation des Sendelichts kann dem Lichtsender ein entsprechender Polarisator nachgeordnet sein. Bei dem optischen Element kann es sich z.B. um ein optisch aktives Element oder z.B. ein λ/2-Plättchen handeln. Bei dieser Ausführungsform wird polarisiertes Sendelicht verwendet, das nach dem Durchgang durch die Objektivanordnung ein polarisationsdrehendes optisches Element durchläuft, so dass die Polarisationsebene des an einem Objekt reflektierten Lichts gegenüber der Polarisationsebene des Sendelichts gedreht ist und das Sendelicht mit der ursprünglichen Polarisationsebene und insbesondere Streulicht, das durch Sendelicht mit der ursprünglichen Polarisationsebene erzeugt wurde, durch ein entsprechendes Polarisationsfilter im Empfangslichtpfad blockiert wird. Das polarisationsdrehende Element kann bevorzugt objektseitig betrachtet vor einer Frontlinse der Objektivanordnung angeordnet werden. Das Polarisationsfilter im Empfangslichtpfad kann beispielsweise unmittelbar vor dem Lichtempfänger angeordnet werden.

Gemäß einer weiteren vorteilhaften Ausführungsform ist der Objektivanordnung objektseitig eine Frontscheibe vorgeordnet, welche gegenüber der optischen Achse der Objektivanordnung derart gekippt ist, dass mögliche Reflektionen an Oberflächen der Frontscheibe nicht auf den Lichtempfänger treffen.

Weitere vorteilhafte Ausführungsformen der Erfindung ergeben sich aus den Unteransprüchen, der Beschreibung und den Zeichnungen.

Die Erfindung wird nachfolgend anhand eines Ausführungsbeispiels mit Bezug auf die Zeichnungen beschrieben. Es zeigen:

Fig. 1       eine schematische Darstellung eines optoelektronischen Sensorsystems gemäß einem ersten Ausführungsbeispiel;

Fig. 2       eine schematische Darstellung eines optoelektronischen Sensorsystems gemäß einem zweiten Ausführungsbeispiel;

Fig. 3       eine schematische Darstellung eines optoelektronischen Sensorsystems gemäß einem dritten Ausführungsbeispiel;

Fig. 4       eine schematische Darstellung eines optoelektronischen Sensorsystems gemäß einem vierten Ausführungsbeispiel;

Fig. 5       eine schematische Darstellung einer Objektivanordnung für ein optoelektronisches Sensorsystem gemäß einer ersten Ausführungsform;

Fig. 6       eine schematische Darstellung einer Objektivanordnung für ein optoelektronisches Sensorsystem gemäß einer zweiten Ausführungsform;

Fig. 7a bis 7c       verschiedene beispielhafte zweidimensionale Empfangslichtverteilungen;

Fig. 7d bis 7f       Intensitätsprofile der Empfangslichtverteilungen gemäß Fig. 7a bis 7c; und

Fig. 8a bis 8d       weitere beispielhafte zweidimensionale Empfangslichtverteilungen für verschiedene Objektoberflächen.

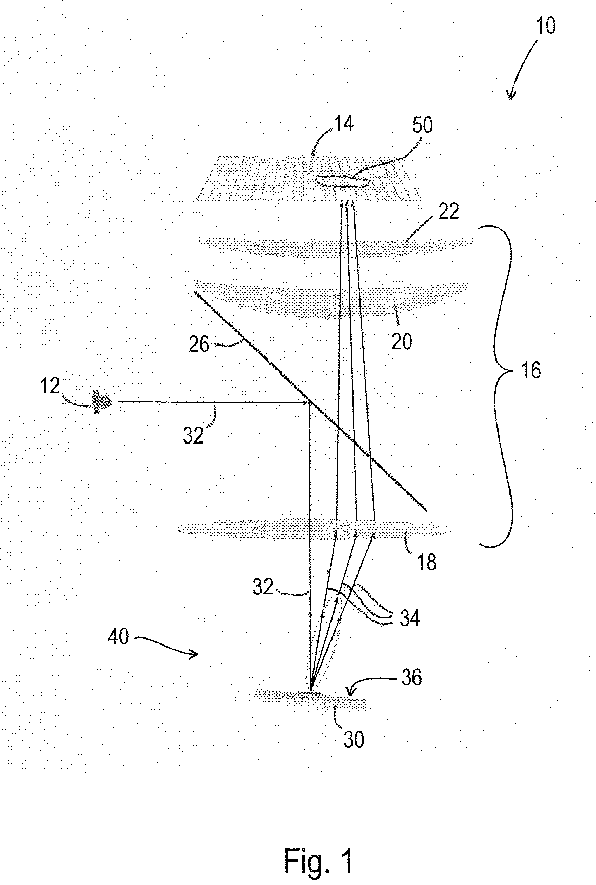

Fig. 1 bis 4 zeigen beispielhaften optoelektronische Sensorsysteme 10, 110, 210, 310 gemäß verschiedener Ausführungsbeispiele. Gleiche oder gleichartige Elemente sind hierbei mit den gleichen Bezugszeichen bezeichnet.

Zunächst werden am Beispiel des optoelektronischen Sensorsystems 10 gemäß Fig. 1 die gemeinsamen Merkmale erläutert, welche in entsprechender Weise auch bei den Sensorsystemen 110, 210, 310 vorgesehen sind. Anschließend werden die jeweiligen spezifischen Merkmale der verschiedenen Ausführungsbeispiele näher beschrieben.

Das optoelektronische Sensorsystem 10 (Fig. 1) umfasst einen Lichtsender 12 zum Aussenden von Sendelicht 32 entlang eines Sendelichtpfads in einen Überwachungsbereich 40. Der Lichtsender 12 kann zum Beispiel eine LED, ein Laser, ein Kantenemitter oder ein Oberflächenemitter (VCSEL) als Lichtquelle umfassen. In Abhängigkeit von Objektmaterial und -farbe der zu erwartenden Objekte kann es vorteilhaft sein, einen Lichtsender 12 zu wählen, der eine oder auch mehrere geeignete Wellenlängen aus einem Spektralbereich emittieren kann, der ultraviolettes, sichtbares und infrarotes Licht umfasst.

Ein gegebenenfalls im Überwachungsbereich 40 vorhandenes Objekt 30 reflektiert das Sendelicht 32 entsprechend seiner Oberflächeneigenschaften diffus oder spiegelnd zurück in Richtung des Sensorsystems 10. Ein Regelarbeitsabstand zwischen einem Objekt 30 und dem Sensorsystem 10 kann beispielsweise 50 mm betragen. Das diffus oder spiegelnd reflektierte Sendelicht 32 wird als Empfangslicht 34 von einem Lichtempfänger 14 empfangen und in elektrische Signale umgewandelt. Die elektrischen Signale werden in einer Auswerteeinheit (nicht dargestellt) weiterverarbeitet und ausgewertet. Die Strahlengänge des Empfangslichts 34 sind in Fig. 1, 2 und 4 nur schematisch und vereinfacht dargestellt.

Der in den Fig. 1 bis 4 teilweise perspektivisch und nicht maßstäblich dargestellte Lichtempfänger 14 ist als Bildsensor mit einer Matrix, d.h. einer Vielzahl von in Reihen und Spalten angeordneten lichtempfindlichen Elementen ausgestaltet. Beispielsweise der Lichtempfänger 14 bzw. der Bildsensor kann aus einer diskreten Matrix aus Photodioden oder Avalanche-Photodioden (APDs) bestehen oder in CMOS-, CCD- oder SPAD-Technologie (SPAD: engl. single-photon avalanche diode) aufgebaut sein.

Im Strahlengang des Sensorsystems 10 sind ferner eine Objektivanordnung 16 mit mehreren Linsen und ein Teilerspiegel 26 angeordnet. Die Objektivanordnung 16 umfasst in einer Reihenfolge von der Objektseite her betrachtet eine Frontlinse oder erste Linse 18, eine zweite Linse 20 und eine dritte Linse 22. Der Teilerspiegel 26 ist beim gezeigten Beispiel zwischen der ersten Linse 18 und der zweiten Linse 20 angeordnet. Andere Positionen des Teilerspiegels 26 sind grundsätzlich möglich.

Das von dem Lichtsender 12 emittierte Sendelicht 32 trifft zunächst auf den Teilerspiegel 26 und wird dort in Richtung des Überwachungsbereichs 40 umgelenkt. Die erste Linse 18 formt das Sendelicht 32 zu einem parallelen Strahlenbündel.

Das Sensorsystem 10 ist nach dem Autokollimationsprinzip aufgebaut, so dass das Empfangslicht 34 nach einer Reflexion an einer senkrecht zum Sendelichtpfad verlaufenden Oberfläche auf dem gleichen Weg (d.h., im Wesentlichen entgegengesetzt) wie das Sendelicht 32 zurückgeworfen wird, wobei im Ausführungsbeispiel die erste Linse 18 die bei einem Autokollimationsaufbau übliche gemeinsame Sende- und Empfangslinse bildet. Das Empfangslicht 34 passiert nacheinander die erste Linse 18, den Teilerspiegel 26, die zweite Linse 20 und die dritte Linse 22. Anschließend trifft es auf den zweidimensionalen Lichtempfänger 14 und erzeugt dort eine in Fig. 1 angedeutete kreisförmige Empfangslichtverteilung 50.

Wie es in Fig. 1 bereits angedeutet ist, wird das Empfangslicht 34 mit leicht variierenden Streuwinkeln, d.h. zumindest teilweise diffus reflektiert. Während bei einer perfekt spiegelnden Objektoberfläche 36 ein ebenfalls paralleles Empfangslichtbündel zu erwarten ist, das zu einer annähernd punktförmigen Empfangslichtverteilung führen würde, wird bei einer nicht perfekt spiegelnd reflektierenden Objektoberfläche 36 ein divergentes Empfangslichtbündel erzeugt, das zu einer ausgedehnten, beispielsweise kreisförmigen Empfangslichtverteilung 50 führt, deren Intensitätsverlauf oder auch deren Amplitudenverlauf in der Regel im Zentrum ein Maximum aufweist und zu den Rändern hin abfällt.

Wie es in Fig. 1 schon angedeutet ist und es weiter unten noch näher erläutert wird, erzeugt die Objektivanordnung 16 kein Abbild des auf der Objektoberfläche 36 erzeugten Lichtflecks, sondern eine Lichtverteilung innerhalb derer ein bestimmter Auftreffort auf dem Lichtempfänger 14 einen gewissen Empfangswinkel des zugehörigen Empfangslichtstrahls repräsentiert.

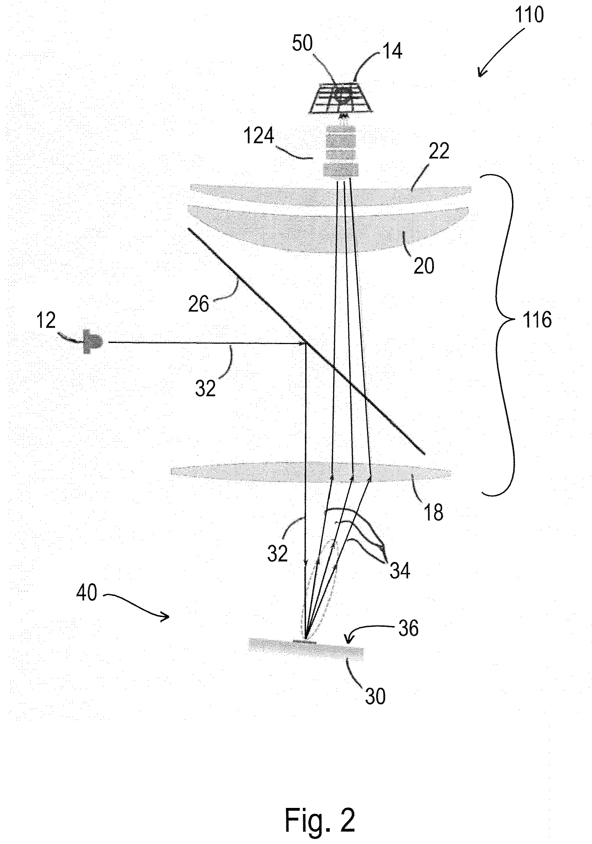

Mit Bezug auf Fig. 2 wird nun der Aufbau des optoelektronischen Sensorsystems 110 gemäß dem zweiten Ausführungsbeispiel näher erläutert. Wie gut zu erkennen ist, umfasst die Objektivanordnung 116 im Unterschied zur Objektivanordnung 16 von Fig. 1 zusätzlich zu den Linsen 18, 20, 22 eine der dritten Linse 22 nachgeordnete Linsengruppe 124 mit mehreren Linsen. Mittels dieser Linsengruppe 124 können die Abbildungscharakteristika der Objektivanordnung 116 verbessert werden. So können beispielsweise Bildfehler korrigiert werden oder eine verbesserte Anpassung an das Bildfeld des Lichtempfängers 14 erfolgen.

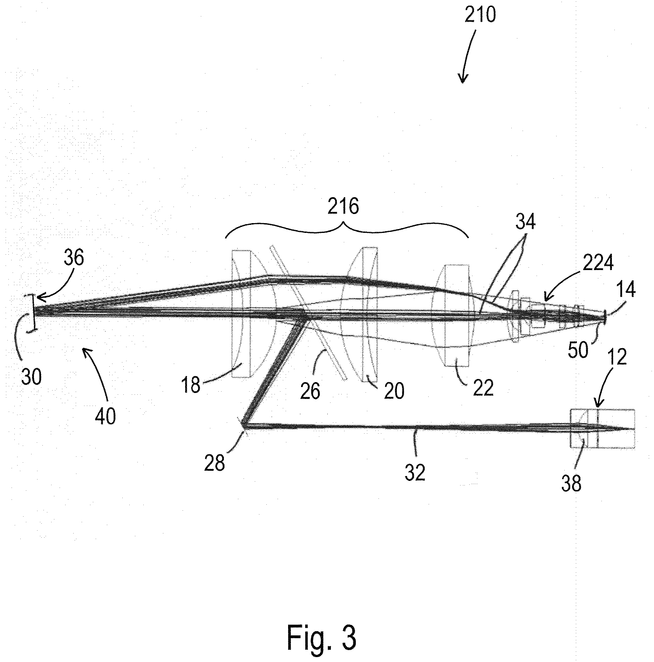

Bei dem optoelektronischen Sensorsystem 210 gemäß dem dritten Ausführungsbeispiel (Fig. 3) weist die Objektivanordnung 216 zusätzlich zu den drei Linsen 18, 20, 22 eine der dritten Linse 22 nachgeordnete Linsengruppe 224 auf. Im Unterschied zu den Ausführungsbeispielen von Fig. 1 und 2 verlässt das Sendelicht 32 den Lichtsender 12 nicht senkrecht zur Hauptrichtung des Empfangslichtpfades, sondern parallel zur Hauptrichtung des Empfangslichtpfades. Zur Umlenkung des Sendelichts 32 ist daher neben dem halbdurchlässigen Teilerspiegel 26 zusätzlich ein Umlenkspiegel 28 vorgesehen, der parallel zum Teilerspiegel 26 verläuft. Wie in Fig. 3 zu erkennen ist, kann die Ausrichtung des Teilerspiegels 26 auch von der 45°-Ausrichtung der Teilerspiegel 26 von Fig. 1 und 2 bezogen auf eine optische Achse der Objektivanordnung 16, 116 abweichen. Auch andere Austrittsrichtungen des Sendelichts relativ zum Empfangslichtpfad sind möglich. Schließlich weist der Lichtsender 12 eine zusätzliche Sendeoptik 38 auf. Die in Fig. 3 rechts vom Teilerspiegel 26 sichtbaren Strahlengänge 34 des Empfangslichtes repräsentieren unterschiedliche Anteile des auf den Lichtempfänger 14 auftreffenden Lichts. Die im Wesentlichen horizontalen, achsnahen Linien zeigen den Strahlengang desjenigen Empfangslichtes 34, welches durch Reflexionen an der ersten Linse 18 entsteht, Der andere erkennbare, eher außeraxiale Strahlengang 34 zeigt den Lichtweg des am Objekt 30 reflektierten Empfangslichtes 34 für den Fall, in dem die Objektoberfläche 36 wie dargestellt unter anderem Winkel gegenüber dem einfallenden Sendelicht geneigt ist.

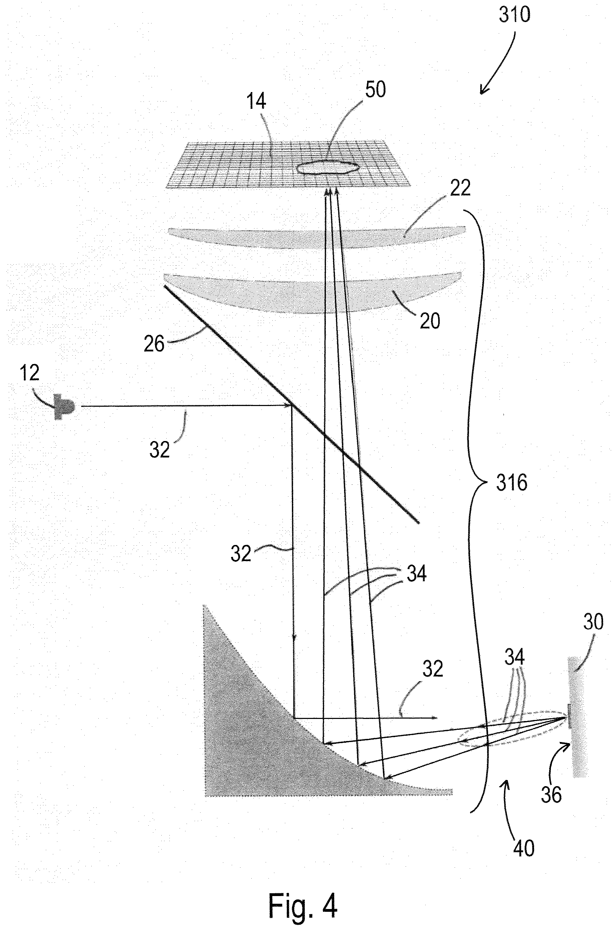

Bei dem optoelektronischen Sensorsystem 310 gemäß dem vierten Ausführungsbeispiel (Fig. 4) umfasst die Objektivanordnung 316 im Vergleich zu den Sensorsystemen 10, 110, 210 anstelle einer ersten Linse 18 einen gekrümmten Spiegel 52. Ein Vorteil dieses Ausführungsbeispiels besteht darin, dass die Zahl der Oberflächen, an denen Störlichtkomponenten entstehen können, reduziert ist. Zusätzlich erlaubt die Verwendung des gekrümmten Spiegels 52 im Unterschied zu den Ausführungsbeispielen von Fig. 1 und 2 die Detektionsrichtung relativ zur Achse des Empfängers zu verändern. So kann durch den gekrümmten Spiegel 52 neben der Strahlformung der Verlauf der optischen Achse der Objektivanordnung 316 im Überwachungsbereich 40 relativ zum restlichen Bereich wie dargestellt um etwa 90° oder auch um andere, größere oder kleinere Winkel umgelenkt werden.

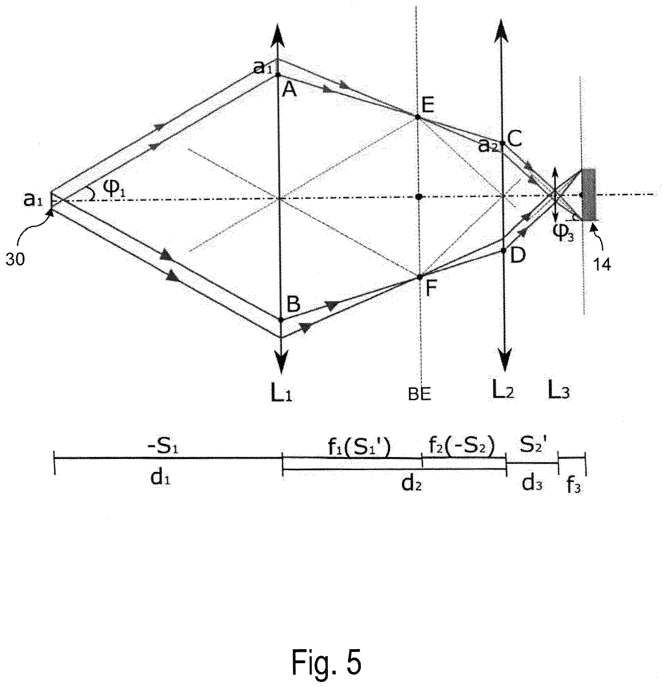

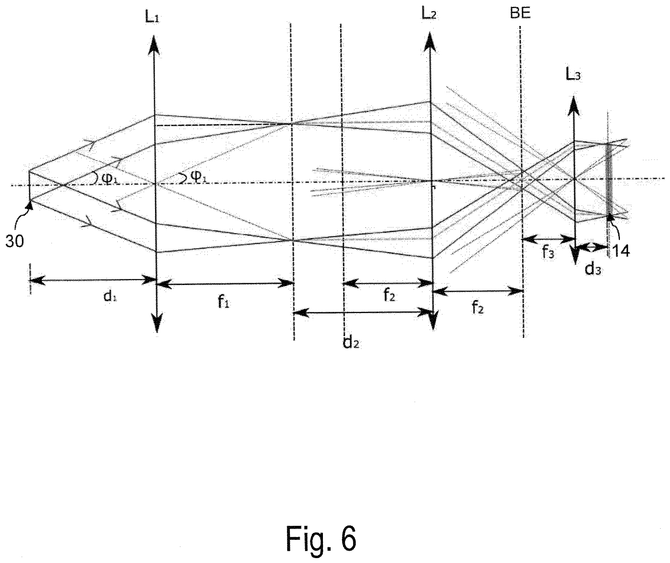

Mit Bezug auf Fig. 5 und 6 wird nun näher erläutert, wie beispielhaft mit Hilfe einer dreilinsigen Objektivanordnung eine durch die Reflexion an der Objektoberfläche erzeugte Streuwinkelverteilung in eine Ortsverteilung innerhalb der Empfangslichtverteilung 34 umgesetzt werden kann.

Die in Fig. 5 und 6 verwendeten Linsen L1, L2, L3 können insbesondere den Linsen 18, 20, 22 (Fig. 1 bis 3) entsprechen.

Bei der ersten Ausführungsform gemäß Fig. 5 bilden die erste Linse L1 und die zweite Linse L2 eine Teleskopstruktur, wobei die bildseitige Brennebene der ersten Linse L1 und die objektseitige Brennebene der zweiten Linse L2 auf einer gemeinsamen Brennebene BE liegen. Die Anordnung ist derart gewählt, dass ein auf einer Oberfläche eines Objektes 30 erzeugter Lichtfleck (hier mit der Ausdehnung $a_1$) in die Hauptebene der dritten Linse L3 abgebildet wird. Die dritte Linse L3 verwirklicht schließlich die Abbildung der Streuwinkelverteilung in eine Ortsverteilung der Streuung auf den in der Bildebene angeordneten Lichtempfänger 14. In der Ebene der Linse L1 befindet sich ein virtuelles Zwischenbild des Lichtflecks (ebenfalls mit der Ausdehnung $a_1$) und in der Ebene der Linse L2 ein verkleinertes virtuelles Zwischenbild des Lichtflecks (mit der Ausdehnung $a_2$).

Die Newtonsche Abbildungsgleichung für diese Objektivanordnung lautet:

$$\frac{1}{S'_1} - \frac{1}{S_1} = \frac{1}{f_1}$$

$$S_2 = S'_1 - d_2$$

$$\frac{1}{S'_2} - \frac{1}{S_2} = \frac{1}{f_2}'$$

wobei $d_2 = f_1 + f_2$, $d_1 = -S_1$ und $d_3 = S'_2$. Aus diesen Gleichungen ergibt sich der Abstand $d_3$ der dritten Linse L3 zur zweiten Linse L2 als $d_3 = f_1 \cdot k + f_1 \cdot k^2 - d_1 \cdot k^2$, wobei k das Verhältnis der zweiten Brennweite $f_2$ zur der ersten Brennweite $f_1$ ist, d. h.:

$$k = \frac{f_2}{f_1}.$$

Die Bedeutung der verschiedenen in den Gleichungen verwendeten Größen ergibt sich auch aus Fig. 5.

Mit Bezug auf Fig. 6 wird nun eine Objektivanordnung gemäß einer zweiten Ausführungsform beschrieben. Diese Objektivanordnung umfasst in einer Reihenfolge von der Objektseite zur Bildseite wiederum drei Linsen L1, L2, L3. Im Unterschied zur Ausführungsform gemäß Fig. 5 bilden hier die zweite Linse L2 und die dritte Linse L3 eine Teleskopstruktur, wobei hier die bildseitige Brennebene der zweiten Linse L2 und die objektseitige Brennebene der dritten Linse L3 in einer gemeinsamen Brennebene BE liegen. Die erste Linse L1 überführt die Streuwinkelverteilung des Lichtflecks $a_1$ in eine Ortsverteilung, welche sich in der bildseitigen Brennebene der ersten Linse L1 befindet. Die aus der zweiten Linse L2 und der dritten Linse L3 gebildete Teleskopstruktur bildet diese in die bildseitige Brennebene der ersten Linse L1 abgebildete Ortsverteilung der Streuung verkleinert auf den Lichtempfänger 14 ab.

Die Objektivanordnung gemäß Fig. 6 unterscheidet sich von der Objektivanordnung gemäß Fig. 5 durch eine kürzere Gesamtlänge, wobei der halbe Bildwinkel $\varphi_1$ jeweils gleich ist.

Die Linsen der Objektivanordnung können zumindest teilweise durch entsprechend angeordnete teils oder vollständig spiegelnde Elemente oder ein monolithisches Design ersetzt werden. Die Anzahl der Linsen kann variiert werden. Durch Hinzufügen weiterer Linsen ergibt sich der Vorteil weiterer Freiheitsgrade in der Optimierung der Geometrie und/oder der Korrektur von Bildfehlern, was zu einer Optimierung der Signalstabilität führt. Wird die Anzahl der Linsen kleiner gewählt, so wird der Sensoraufbau kostengünstiger, jedoch die Signalstabilität kleiner. Durch die Wahl eines Lichtempfängers mit einer größeren Empfangsfläche können ebenfalls Linsen eingespart werden, wodurch der Aufbau kompakter, jedoch durch die größere Empfangsfläche verteuert wird.

Zur Unterdrückung von unerwünschten Reflexionen des Sendelichts 12 an der ersten Linse 18, L1 kann diese antireflektierend ausgerüstet sein, z.B. mit einer Antireflexbeschichtung oder einer Nanostrukturierung versehen sein. Es können auch andere alternative oder zusätzliche Maßnahmen zur Reflexionsminderung getroffen werden, z.B. durch eine Frontscheibe und/oder Polarisationsfilter vor und hinter der ersten Linse 18, L1.

Dem Nachteil eines begrenzten Dynamikumfangs des Lichtempfängers, z.B. eines CMOS-Lichtempfängers, kann mit einem sogenannten HDR-Verfahren (von engl. high dynamic range) entgegengewirkt werden, bei dem mehrere Aufnahmen mit variierenden Belichtungszeiten gemacht werden und nur die nicht-übersteuerten Aufnahmen verwendet werden. Zusätzlich kann auch die Sendeintensität des Lichtsenders verändert werden. Insbesondere bei in Glanz und Remission stark variierenden Objekten kann mit vergrößerter Dynamik detektiert werden, wodurch genauere Messergebnisse erzielt werden.

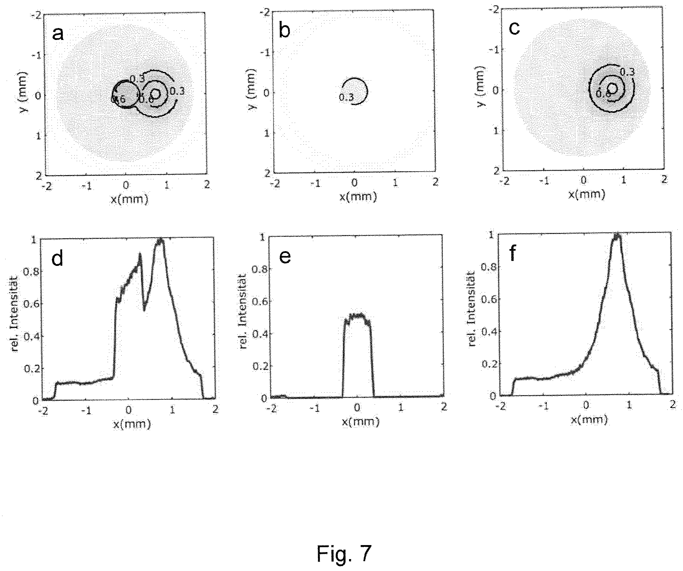

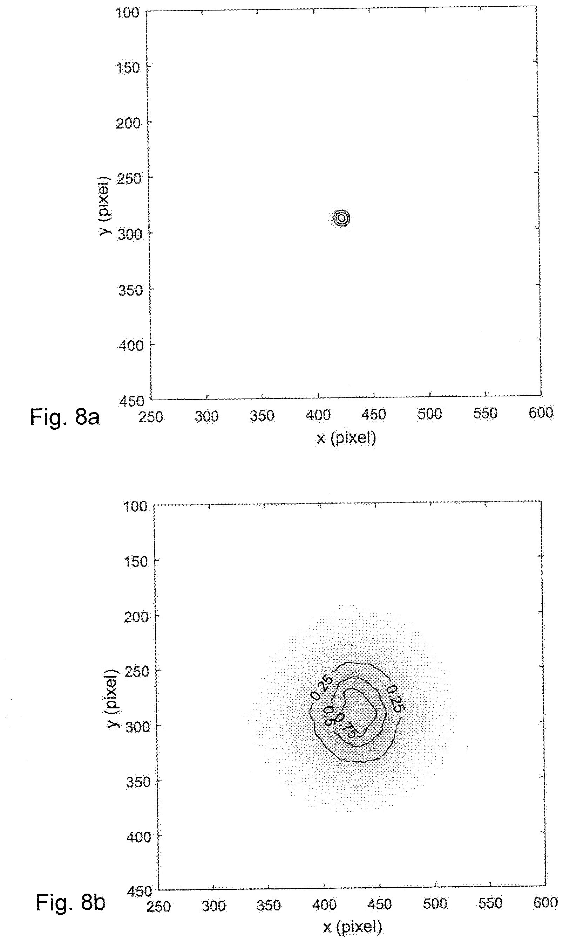

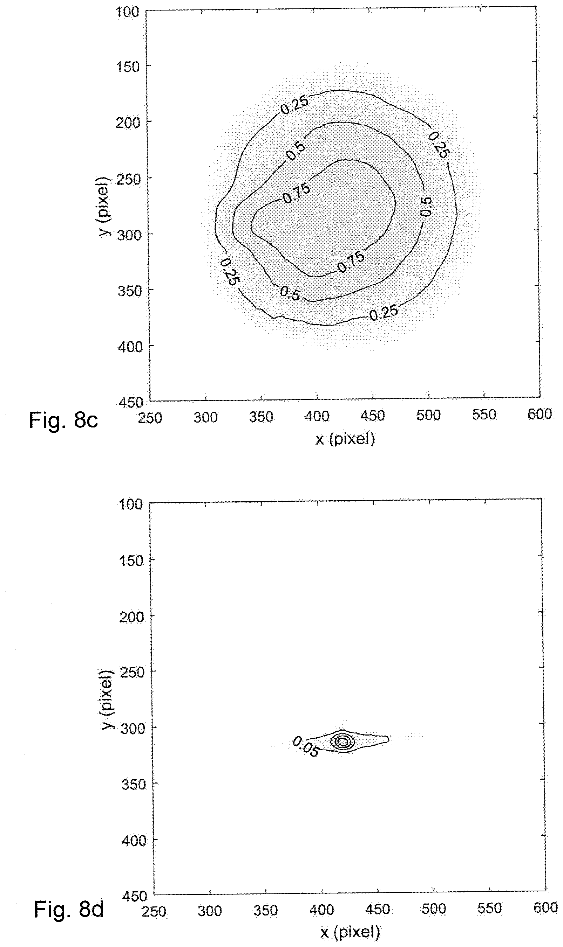

Mit Bezug auf Fig. 7 und 8 wird die Auswertung von Empfangslichtverteilungen erläutert, um hieraus Informationen über den Streuwinkel bezogen auf eine Objektoberfläche eines detektierten Objekts zu gewinnen. In Fig. 7a bis 7c sind beispielhaft verschiedene Empfangslichtverteilungen bzw. deren Intensitätsverläufe wiedergegeben. Unterschiedliche Intensitäten sind für eine jeweilige x-y-Koordinate durch einen unterschiedlichen Helligkeitswert repräsentiert, wobei die Intensität innerhalb eines relativen Intensitätsbereichs zwischen 0 und 1 normiert wurde. Zur besseren Erkennung der Intensitätswerte sind Konturlinien für eine relative Intensität von 0,3, 0,6 und 0,9 eingezeichnet, wobei jedoch aus Gründen der Übersichtlichkeit ein Teil der Konturlinien nicht beschriftet ist.

In Fig. 7d bis 7f sind zugehörige Intensitätsprofile für eine bei der y-Koordinate 0 verlaufende Linie dargestellt.

Wie es in Fig. 7a und 7d zu erkennen ist, weist die dort wiedergegebene Empfangslichtverteilung zwei Maxima auf. Hierbei repräsentiert der linke, im Ursprung des Koordinatensystems gelegene Peak ein Hintergrund- oder Störsignal, welches auf Reflexionen von Sendelicht 12 an der ersten Linse 18 (Fig. 1 bis 3) zurückzuführen ist.

Der rechte, außermittig gelegene Peak stellt eine Signalkomponente dar, die auf ein Objekt zurückzuführen ist, welches um 0° um die x-Achse und um -3° um die y-Achse verkippt wurde. Die genannten Winkel beziehen sich insbesondere auf einen Winkel zwischen einer Flächennormalen der Objektoberfläche 36 und einer optischen Achse der Objektivanordnung 16, 116, 216 (Fig. 1 bis 3).

Fig. 7b und 7e zeigen eine Korrekturempfangslichtverteilung, welche vorgängig bei regulären Betriebsbedingungen des Sensorsystems, jedoch ohne Anwesenheit eines Objekts im Überwachungsbereich erfasst wurde. Reguläre Betriebsbedingungen bedeuten insbesondere, dass der Lichtsender in Betrieb ist und auch gegebenenfalls vorhandenes Raum- oder Umgebungslicht, welches einen Störeinfluss auf eine Empfangslichtverteilung haben kann, ebenfalls eingeschaltet ist. Die Korrekturempfangslichtverteilung umfasst insbesondere in ihrem zentralen Bereich eine Störlichtkomponente, welche auf die vorstehend genannten Lichtstreuungen oder Lichtreflexionen an den Linsen der Objektivanordnung, insbesondere der ersten Linse, zurückzuführen sind.

Durch Subtraktion der Korrekturempfangslichtverteilung (Fig. 7b und 7e) von der erfassten Empfangslichtverteilung (Fig. 7a und 7d) ergibt sich eine bereinigte Empfangslichtverteilung, wie sie in Fig. 7c und 7f dargestellt ist. Es ist gut zu erkennen, dass nur noch diejenigen Komponenten vorhanden sind, die auf eine Reflexion an einem Objekt zurückzuführen sind.

In Fig. 8a bis 8d sind nun verschiedene, um Störkomponenten bereinigte Empfangslichtverteilungen bzw. deren Intensitätsverläufe für Objekte mit unterschiedlichen Oberflächeneigenschaften dargestellt. Auch hier wurde die Intensität wiederum auf eine relative Intensität mit einem Wertebereich zwischen 0 und 1 normiert, welche durch unterschiedliche Helligkeitswerte repräsentiert sind, wobei zusätzlich Konturlinien für die Intensitäten 0,25, 0,5 und 0,75 eingezeichnet wurden, wobei jedoch aus Gründen der Übersichtlichkeit ein Teil der Konturlinien nicht beschriftet ist.

Fig. 8a zeigt eine Empfangslichtverteilung für einen Spiegel. Wie gut zu erkennen ist, weist der Peak eine sehr geringe Halbwertsbreite auf, so dass die einzelnen Konturlinien nicht mehr voneinander unterschieden werden können.

Fig. 8b zeigt die Empfangslichtverteilung für eine glänzende graue Oberfläche.

Fig. 8c repräsentiert eine Empfangslichtverteilung für eine matte, schwarze Oberfläche.

Fig. 8d zeigt schließlich eine Empfangslichtverteilung für eine metallische spiegelnde Oberfläche, welche eine gerichtete Struktur, wie sie beispielsweise durch Bürsten erzeugt werden kann, aufweist. Zusätzlich zu den vorstehend genannten Konturlinien, welche wiederum sehr eng beieinanderliegen, ist zusätzlich noch eine weitere Konturlinie für eine relative Intensität von 0,05 eingezeichnet.

Während die Lichtverteilungen von Fig. 8a bis 8c im Wesentlichen rotationssymmetrisch sind, ist die Lichtverteilung von Fig. 8d in x-Richtung im Vergleich zur y-Richtung deutlich elongiert.

Aus einem Vergleich der Fig. 8a bis 8c ist gut zu erkennen, dass die Breite der Streulichtverteilung mit abnehmendem Glanzgrad von Fig. 8a zu Fig. 8c hin erkennbar zunimmt. Daher kann durch einen Vergleich mit entsprechenden Referenzmustern, die für repräsentative oder häufig vom System erfasste Objekte jeweils separat im Rahmen eines Einlernvorgangs aufgenommen wurden, der Glanzgrad, insbesondere auch ein anisotroper Glanzgrad, für die Oberfläche eines unbekannten Objekts ermittelt werden. Gegebenenfalls können hier auch entsprechende Interpolationen durchgeführt werden. Die entsprechenden Auswertevorgänge können sowohl musterbasiert als auch arithmetisch bzw. algebraisch auf der Grundlage einer ermittelten Breite, insbesondere der Halbwertsbreite der Empfangslichtverteilung durchgeführt werden. Alternativ oder zusätzlich können weitere Charakteristika der Empfangslichtverteilung einbezogen werden.

Zudem wird im Hinblick auf Fig. 7 deutlich, dass auch eine etwaige Objektverkippung ermittelt und/oder berücksichtigt werden kann. Objektverkippungen wirken sich durch eine Verschiebung der Empfangslichtverteilung, insbesondere bezogen auf einen Schwerpunkt oder ein Maximum der Empfangslichtverteilung in x- und/oder y-Richtung aus. Eine Quantifizierung ist möglich. Dies kann insofern hilfreich sein, um den Einfluss einer Objektverkippung auf die Signalhöhe und/oder die Form der Empfangslichtverteilung zu berücksichtigen.

Die genannten verschiedenen Parameter, die Einfluss auf die Gestalt einer Empfangslichtverteilung haben, können im Rahmen eines Einlernvorgangs berücksichtigt werden, innerhalb dessen beispielsweise für n verschiedene Parameter (Glanzgrad, Verkippung, Objektabstand, ...), die jeweils mit einer bestimmten Anzahl variiert werden, eine n-dimensionale Matrix von Referenzlichtverteilungsmustern erzeugt werden kann, welche in der Auswerteeinheit hinterlegt werden können.

Die entsprechenden Auswertevorgänge können sowohl musterbasiert durch einen Vergleich einer aufgenommenen Empfangslichtverteilung mit Referenzlichtverteilungsmustern als auch arithmetisch bzw. algebraisch auf der Grundlage geeigneter Parametrierungen der Empfangslichtverteilungen bzw. der Referenzlichtverteilungen erfolgen.

Bezugszeichenliste

| | |
|---|---|
| 10, 110, 210, 310 | Sensorsystem |
| 12 | Lichtsender |
| 14 | Lichtempfänger |
| 16, 116, 216, 316 | Objektivanordnung |
| 18, L1 | erste Linse, Frontlinse |
| 20, L2 | zweite Linse |
| 22, L3 | dritte Linse |
| 124, 224 | Linsengruppe |
| 26 | Teilerspiegel |
| 28 | Umlenkspiegel |
| 30 | Objekt |
| 32 | Sendelicht |
| 34 | Empfangslicht |
| 36 | Objektoberfläche |
| 38 | Sendeoptik |
| 40 | Überwachungsbereich |
| 50 | Empfangslichtverteilung |
| 52 | gekrümmter Spiegel |

**Patentansprüche**

1.   Optoelektronisches Sensorsystem (10, 110, 210, 310), welches als Lichttaster zum Detektieren von gegebenenfalls in einem Überwachungsbereich (40) vorhandenen Objekten (30) ausgebildet ist, mit

- einem Lichtsender (12) zum Aussenden von Sendelicht (32) entlang eines Sendelichtpfads in den Überwachungsbereich (40),
- einem Lichtempfänger (14) zum Empfangen von Empfangslicht (34) aus dem Überwachungsbereich (40), das von einem zu detektierenden Objekt (30) im Überwachungsbereich (40) in Richtung des Lichtempfängers (14) diffus und/oder spiegelnd reflektiert wird, wobei der Sendelichtpfad und der Empfangslichtpfad gemäß dem Autokollimationsprinzip zumindest abschnittsweise zusammenfallen, und
- einer Objektivanordnung (16, 116, 216, 316),

wobei der Lichtempfänger (14) als Bildsensor ausgebildet ist, und
wobei die Objektivanordnung (16, 116, 216, 316) derart ausgestaltet ist, dass der Intensitätsverlauf einer von der Objektivanordnung (16, 116, 216, 316) auf dem Lichtempfänger (14) erzeugten zweidimensionalen Empfangslichtverteilung Informationen über den Streuwinkel bezogen auf eine Oberfläche (36) eines detektierten Objekts (30) umfasst,
**dadurch gekennzeichnet,**
**dass** im Bereich desjenigen Teils des im Sensorsystem verlaufenden Empfangslichtpfads, welcher nicht mit dem Sendelichtpfad zusammenfällt, wenigstens zwei Linsen (20, 22, L2, L3) angeordnet sind, und die Objektivanordnung (16, 116, 216, 316) zumindest eine gemeinsame Linse (18, L1) und/oder einen gemeinsamen gekrümmten Spiegel (52) umfasst, welche oder welcher in einem Bereich angeordnet ist, in dem der Sendelichtpfad und der Empfangslichtpfad zusammenfallen,
**dass** das Sensorsystem (10, 110, 210, 310) eine mit dem Lichtempfänger (14) verbundene Auswerteeinheit umfasst, welche dazu eingerichtet ist, eine von dem Lichtempfänger (14) erfasste Empfangslichtverteilung auszuwerten, um aus zumindest einem Charakteristikum der Empfangslichtverteilung Informationen über wenigstens ein Oberflächencharakteristikum der Oberfläche (36) des detektierten Objekts (30) zu erhalten,
**dass** das zumindest eine Oberflächencharakteristikum den Glanzgrad und/oder den Remissionsgrad der Oberfläche (36) des detektierten Objekts (30) umfasst,

**dass** das zumindest eine Charakteristikum der Empfangslichtverteilung eine Höhe eines Maximums, eine Halbwertsbreite und/oder zumindest ein zweidimensionales Moment, insbesondere den Erwartungswert oder die Varianz, der Empfangslichtverteilung umfasst, und

**dass** die Auswerteeinheit dazu eingerichtet ist, Störlichtkomponenten, welche auf Lichtstreuungen an Linsen der Objektivanordnung (16, 116, 216, 316) oder auf andere Störlichtquellen zurückzuführen sind, aus einer erfassten Empfangslichtverteilung vor einer Auswertung derselben durch Subtraktion zumindest einer Korrekturempfangslichtverteilung, welche vorgängig erfasst wurde, von der erfassten Empfangslichtverteilung oder auf der Grundlage eines Mustererkennungsalgorithmus zu entfernen.

2. Sensorsystem (10, 110, 210, 310) nach Anspruch 1,
**dadurch gekennzeichnet,**
**dass** die Informationen über den Streuwinkel sowohl Informationen über eine Polarwinkelkomponente als auch eine Azimutwinkelkomponente umfasst.

3. Sensorsystem (10, 110, 210, 310) nach einem der vorhergehenden Ansprüche,
**dadurch gekennzeichnet,**
**dass** das Sensorsystem (10, 110, 210, 310) derart eingerichtet ist, dass das Sendelicht (32) als paralleles Strahlenbündel in den Überwachungsbereich (40) eintritt.

4. Sensorsystem (10, 110, 210, 310) nach Anspruch 3,
**dadurch gekennzeichnet,**
**dass** das Sensorsystem (10, 110, 210, 310) eine Sendeoptik (38) umfasst, wobei die Sendeoptik (38) mit der gemeinsamen Linse (18, L1) und/oder dem gemeinsamen gekrümmten Spiegel (52) derart zusammenwirkt, dass das Sendelicht (32) als paralleles Strahlenbündel in den Überwachungsbereich (40) eintritt.

5. Sensorsystem (10, 110, 210, 310) nach einem der vorhergehenden Ansprüche,
**dadurch gekennzeichnet,**
**dass** die Auswerteeinheit dazu eingerichtet ist, eine Verkippung der Oberfläche (36) des detektierten Objekts (30) in Bezug auf eine vorgegebene Referenzachse auf der Grundlage einer Abweichung der Auftreffposition der Empfangslichtverteilung auf dem Lichtempfänger (14) von einer Referenz-Auftreffposition zu ermitteln.

6. Sensorsystem (10, 110, 210, 310) nach einem der vorhergehenden Ansprüche,
**dadurch gekennzeichnet,**
**dass** die Auswerteeinheit dazu eingerichtet ist, Informationen über wenigstens ein Oberflächencharakteristikum der Oberfläche (36) des detektierten Objekts (30) und/oder eine Verkippung der Oberfläche (36) des detektierten Objekts (30) in Bezug auf eine vorgegebene Referenzachse auf der Grundlage eines Vergleichs der von dem Lichtempfänger (14) erfassten Empfangslichtverteilung für ein Objekt (30) mit einer Vielzahl von Referenzempfangslichtverteilungen auszuwerten, welche im Rahmen eines vorgängig durchgeführten Einlernvorgangs für verschiedene Referenzobjekte mit jeweils unterschiedlichen bekannten Oberflächencharakteristika und für unterschiedliche bekannte Verkippungen der Oberfläche (36) erfasst wurden, bevorzugt zusätzlich auch für unterschiedliche Abstände der Referenzobjekte von dem Sensorsystem (10, 110, 210, 310).

7. Sensorsystem (10, 110, 210, 310) nach einem der vorhergehenden Ansprüche,
**dadurch gekennzeichnet,**

**dass** im Strahlengang des Sendelichts (12) zur Unterdrückung von Störlichtkomponenten, welche auf Lichtstreuungen an Linsen der Objektivanordnung (16, 116, 216, 316) zurückzuführen sind, ein Wellenlängenkonversionselement vorgesehen ist, das die ursprüngliche Wellenlänge des Sendelichts (12) nach dem Durchgang durch die Objektivanordnung (16, 116, 216, 316) verändert, so dass in der Wellenlänge verändertes Licht auf ein Objekt (30) trifft, und

**dass** im Strahlengang des Empfangslichts (34) ein Filter vorgesehen ist, welcher in der Wellenlänge verschobenes Licht passieren lässt und Licht mit der ursprünglichen Wellenlänge des Sendelichts (12) blockiert.

8. Sensorsystem (10, 110, 210, 310) nach einem der vorhergehenden Ansprüche,
**dadurch gekennzeichnet,**

**dass** der Lichtsender (12) zum Aussenden von linear polarisiertem Sendelicht (32) eingerichtet ist,
**dass** in einem Austrittsbereich des Sendelichts (32) aus dem Sensorsystem (10, 110, 210, 310) ein optisches Element angeordnet ist, welches dazu eingerichtet ist, die Polarisationsebene des Sendelichts (32) zu drehen, vorgesehen ist, und

**dass** im Bereich desjenigen Teils des im Sensorsystem verlaufenden Empfangslichtpfads, welcher nicht mit dem Sendelichtpfad zusammenfällt, ein Polarisationsfilter vorgesehen ist, das in der ursprünglichen Polarisationsebene des Sendelichts (12) polarisiertes Licht blockiert und Licht, dessen Polarisationsebene gleich der gedrehten Polarisationsebene ist, passieren lässt.

**Claims**

1. An optoelectronic sensor system (10, 110, 210, 310) which is configured as an optical sensor for detecting objects (30) possibly present in a monitored zone (40), said optoelectronic sensor system (10, 110, 210, 310) comprising

   - a light transmitter (12) for transmitting transmission light (32) along a transmission light path (20) into the monitored zone (40);
   - a light receiver (14) for receiving reception light (34) from the monitored zone (40) that is diffusely and/or specularly reflected by an object (30) to be detected in the monitored zone (40) in the direction of the light receiver (14), wherein the transmission light path and the reception light path coincide at least sectionally in accordance with the autocollimation principle; and
   - an objective arrangement (16, 116, 216, 316),

   wherein the light receiver (14) is configured as an image sensor, and wherein the objective arrangement (16, 116, 216, 316) is designed such that the intensity curve of a two-dimensional reception light distribution generated by the objective arrangement (16, 116, 216, 316) on the light receiver (14) comprises information about the scattering angle with respect to a surface (36) of a detected object (30),
   **characterized in that**
   at least two lenses (20, 22, L2, L3) are arranged in the region of that part of the reception light path extending in the sensor system which does not coincide with the transmission light path and the objective arrangement (16, 116, 216, 316) comprises at least one common lens (18, L1) and/or a common curved mirror (52) which is arranged in a region in which the transmission light path and the reception light path coincide,
   **in that** the sensor system (10, 110, 210, 310) comprises an evaluation unit which is connected to the light receiver (14) and which is configured to evaluate a reception light distribution detected by the light receiver (14) in order to obtain information about at least one surface characteristic of the surface (36) of the detected object (30) from at least one characteristic of the reception light distribution,
   **in that** the at least one surface characteristic comprises the gloss level and/or the degree of remission of the surface (36) of the detected object (30),
   **in that** the at least one characteristic of the reception light distribution comprises a height of a maximum, a full width at half maximum and/or at least one two-dimensional momentum, in particular the expectation value or the variance, of the reception light distribution, and
   **in that** the evaluation unit is configured to remove interfering light components, which are due to light scatterings at lenses of the objective arrangement (16, 116, 216, 316) or to other interfering light sources, from a detected reception light distribution before an evaluation thereof by subtracting at least one correction reception light distribution, which was detected beforehand, from the detected reception light distribution or on the basis of a pattern recognition algorithm.

2. A sensor system (10, 110, 210, 310) in accordance with claim 1,
   **characterized in that**
   the information about the scattering angle comprises information about both a polar angle component and an azimuth angle component.

3. A sensor system (10, 110, 210, 310) in accordance with one of the preceding claims,
   **characterized in that**
   the sensor system (10, 110, 210, 310) is configured such that the transmission light (32) enters the monitored zone (40) as a parallel beam.

4. A sensor system (10, 110, 210, 310) in accordance with claim 3,
   **characterized in that**
   the sensor system (10, 110, 210, 310) comprises a transmission optics (38), with the transmission optics (38)

**EP 3 751 256 B1**

cooperating with the common lens (18, L1) and/or the common curved mirror (52) such that the transmission light (32) enters the monitored zone (40) as a parallel beam.

5. A sensor system (10, 110, 210, 310) in accordance with any one of the preceding claims, **characterized in that** the evaluation unit is configured to determine a tilt of the surface (36) of the detected object (30) with respect to a predefined reference axis on the basis of a deviation of the position of incidence of the reception light distribution on the light receiver (14) from a reference position of incidence.

6. A sensor system (10, 110, 210, 310) in accordance with any one of the preceding claims, **characterized in that** the evaluation unit is configured to evaluate information about at least one surface characteristic of the surface (36) of the detected object (30) and/or a tilt of the surface (36) of the detected object (30) with respect to a predefined reference axis on the basis of a comparison of the reception light distribution, detected by the light receiver (14), for an object (30) with a plurality of reference reception light distributions which have been detected as part of a previously performed teach-in process for different reference objects having respective different known surface characteristics and for different known tilts of the surface (36), preferably additionally also for different distances of the reference objects from the sensor system (10, 110, 210, 310).

7. A sensor system (10, 110, 210, 310) in accordance with any one of the preceding claims, **characterized in that**

a wavelength conversion element is provided in the optical path of the transmission light (12) for suppressing interfering light components which are due to light scatterings at lenses of the objective arrangement (16, 116, 216, 316), said wavelength conversion element changing the original wavelength of the transmission light (12) after the passage through the objective arrangement (16, 116, 216, 316) so that light changed in wavelength is incident on an object (30), and **in that** a filter is provided in the optical path of the reception light (34), said filter allowing light shifted in wavelength to pass and blocking light having the original wavelength of the transmission light (12).

8. A sensor system (10, 110, 210, 310) in accordance with any one of the preceding claims, **characterized in that**

the light transmitter (12) is configured to transmit linearly polarized transmission light (32), **in that** an optical element which is configured to rotate the polarization plane of the transmission light (32) is arranged in an exit region of the transmission light (32) from the sensor system (10, 110, 210, 310), and **in that** a polarization filter is provided in the region of that part of the reception light path extending in the sensor system which does not coincide with the transmission light path, said polarization filter blocking light polarized in the original polarization plane of the transmission light (12) and allowing light whose polarization plane is the same as the rotated polarization plane to pass.

**Revendications**

1. Système de capteur optoélectronique (10, 110, 210, 310), réalisé sous forme de détecteur photoélectrique pour la détection d'objets (30) éventuellement présents dans une zone à surveiller (40), comprenant

- un émetteur de lumière (12) pour émettre une lumière d'émission (32) le long d'un chemin de lumière d'émission jusque dans la zone à surveiller (40),
- un récepteur de lumière (14) pour recevoir une lumière de réception (34) provenant de la zone à surveiller (40), qui est réfléchie de manière diffuse et/ou spéculaire par un objet à détecter (30) dans la zone à surveiller (40) en direction du récepteur de lumière (14), le chemin de lumière d'émission et le chemin de lumière de réception coïncidant au moins localement selon le principe d'auto-collimation, et
- un ensemble formant objectif (16, 116, 216, 316),

dans lequel

le récepteur de lumière (14) est réalisé sous forme de capteur d'images, et l'ensemble formant objectif (16, 116, 216, 316) est réalisé de telle sorte que la courbe d'intensité d'une distribution de lumière de réception bidimensionnelle générée par l'ensemble formant objectif (16, 116, 216, 316) sur le récepteur de lumière (14) comprend des informations sur l'angle de diffusion par rapport à une surface (36) d'un objet détecté (30), **caractérisé en ce que**

dans la zone de la partie du chemin de lumière de réception s'étendant dans le système de capteur, laquelle ne coïncide pas avec le chemin de lumière d'émission, il est prévu au moins deux lentilles (20, 22, L2, L3), et l'ensemble formant objectif (16, 116, 216, 316) comprend au moins une lentille commune (18, L1) et/ou un miroir courbe commun (52), qui est agencé(e) dans une zone dans laquelle le chemin de lumière d'émission et le chemin de lumière de réception coïncident,

**en ce que** le système de capteur (10, 110, 210, 310) comprend une unité d'évaluation reliée au récepteur de lumière (14), laquelle est conçue pour évaluer une distribution de lumière de réception détectée par le récepteur de lumière (14) afin d'obtenir, à partir d'au moins une caractéristique de la distribution de lumière de réception, des informations sur au moins une caractéristique de surface de la surface (36) de l'objet détecté (30),

**en ce que** ladite au moins une caractéristique de surface comprend le degré de brillance et/ou le degré de renvoi de la surface (36) de l'objet détecté (30),

**en ce que** ladite au moins une caractéristique de la distribution de lumière de réception comprend une hauteur d'un maximum, une largeur à mi-hauteur et/ou au moins un moment bidimensionnel, en particulier l'espérance ou la variance, de la distribution de la lumière de réception, et

**en ce que** l'unité d'évaluation est conçue pour éliminer des composantes de lumière parasite, dues à des diffusions de lumière sur des lentilles de l'ensemble formant objectif (16, 116, 216, 316) ou à d'autres sources de lumière parasite, d'une distribution de lumière de réception détectée avant une évaluation de celle-ci, par soustraction d'au moins une distribution de lumière de réception de correction, qui a été détectée au préalable, de la distribution de lumière de réception détectée ou sur la base d'un algorithme de reconnaissance de motif.

2. Système de capteur (10, 110, 210, 310) selon la revendication 1,
**caractérisé en ce que**
les informations sur l'angle de diffusion comprennent aussi bien des informations sur une composante d'angle polaire qu'une composante d'angle azimutal.

3. Système de capteur (10, 110, 210, 310) selon l'une des revendications précédentes,
**caractérisé en ce que**
le système de capteur (10, 110, 210, 310) est conçu de telle sorte que la lumière d'émission (32) entre dans la zone à surveiller (40) sous la forme d'un faisceau de rayons parallèles.

4. Système de capteur (10, 110, 210, 310) selon la revendication 3,
**caractérisé en ce que**
le système de capteur (10, 110, 210, 310) comprend une optique d'émission (38), l'optique d'émission (38) coopérant avec la lentille commune (18, L1) et/ou avec le miroir courbe commun (52) de telle sorte que la lumière d'émission (32) entre dans la zone à surveiller (40) sous la forme d'un faisceau de rayons parallèles.

5. Système de capteur (10, 110, 210, 310) selon l'une des revendications précédentes,
**caractérisé en ce que**
l'unité d'évaluation est conçue pour déterminer un basculement de la surface (36) de l'objet détecté (30) par rapport à un axe de référence prédéterminé en se basant sur un écart entre la position d'incidence de la distribution de lumière de réception sur le récepteur de lumière (14) et une position d'incidence de référence.

6. Système de capteur (10, 110, 210, 310) selon l'une des revendications précédentes,
**caractérisé en ce que**
l'unité d'évaluation est conçue pour évaluer des informations sur au moins une caractéristique de surface de la surface (36) de l'objet détecté (30) et/ou un basculement de la surface (36) de l'objet détecté (30) par rapport à un axe de référence prédéterminé, en se basant sur une comparaison de la distribution de lumière de réception pour un objet (30), détectée par le récepteur de lumière (14), avec une pluralité de distributions de lumière de réception de référence, qui ont été saisies dans le cadre d'un processus d'apprentissage effectué au préalable pour différents objets de référence avec respectivement différentes caractéristiques de surface connues et pour différents basculements connus de la surface (36), de préférence en supplément également pour différentes distances des objets de référence par rapport au système de capteur (10, 110, 210, 310).

7. Système de capteur (10, 110, 210, 310) selon l'une des revendications précédentes,

**caractérisé en ce que**

dans le trajet optique de la lumière d'émission (12), afin de supprimer des composantes de lumière parasite qui sont dues à des diffusions de lumière sur des lentilles de l'ensemble formant objectif (16, 116, 216, 316), il est prévu un élément de conversion de longueur d'onde qui modifie la longueur d'onde initiale de la lumière d'émission (12) après le passage à travers l'ensemble formant objectif (16, 116, 216, 316), de sorte que de la lumière modifiée en longueur d'onde arrive sur un objet (30), et

**en ce que** dans le trajet optique de la lumière de réception (34), il est prévu un filtre qui laisse passer la lumière décalée en longueur d'onde et qui bloque la lumière ayant la longueur d'onde initiale de la lumière d'émission (12).

8. Système de capteur (10, 110, 210, 310) selon l'une des revendications précédentes,
**caractérisé en ce que**

l'émetteur de lumière (12) est conçu pour émettre une lumière d'émission (32) polarisée linéairement,

**en ce que** dans une zone de sortie de la lumière d'émission (32) du système de capteur (10, 110, 210, 310), il est prévu un élément optique qui est conçu pour faire tourner le plan de polarisation de la lumière d'émission (32), et

**en ce que** dans la zone de la partie du chemin de lumière de réception s'étendant dans le système de capteur, laquelle ne coïncide pas avec le chemin de lumière d'émission, il est prévu un filtre de polarisation qui bloque la lumière polarisée dans le plan de polarisation initial de la lumière d'émission (12) et qui laisse passer la lumière dont le plan de polarisation est égal au plan de polarisation tourné.

Fig. 1

Fig. 2

Fig. 3

Fig. 4

Fig. 5

Fig. 6

Fig. 7

Fig. 8a

Fig. 8b

Fig. 8c

Fig. 8d

**IN DER BESCHREIBUNG AUFGEFÜHRTE DOKUMENTE**

**In der Beschreibung aufgeführte Patentdokumente**

- EP 2278361 A1
- DE 102013015036 A1
- DE 102015115016 A1
- WO 2018127789 A1
- DE 102005062258 A1
- US 20010017727 A1
- JP 2001324314 A